# EUROPEAN PATENT SPECIFICATION

(11) **EP 1 540 437 B1**
(45) Date of publication and mention of the grant of the patent: **06.11.2013**
(21) Application number: 03759457.9
(22) Date of filing: 17.09.2003
(51) Int. Cl.: G01N 30/34, G01N 30/32, G05D 7/06, G05D 11/13

(54) **FLOW CONTROL SYSTEM**
Regelungssystem für den Durchfluß eines Fluids
Sysème de régulation du débit d'un fluide

(30) Priority: 17.09.2002 US 246284
(43) Date of publication of application: 15.06.2005
(73) Proprietor: AB SCIEX LLC, NW Washington, DC 20006 (US)
(72) Inventor: PAUL, Phillip, H., Livermore, CA 94550 (US); REHM, Jason, E., Alameda, CA 94501 (US); ARNOLD, Don Wesley, Livermore, CA 94550 (US)
(74) Representative: Mollekopf, Gerd Willi
(86) International application number: PCT/US2003/030008
(87) International publication number: WO 2004/027535

(56) References cited:
- DE-A- 19 625 648
- US-A- 3 917 531
- US-A- 5 249 929
- US-A- 5 630 706
- US-B1- 6 277 257

## Description

### BACKGROUND

The invention relates to systems in which liquids flow at low rates, in particular at rates of less than about 100 microliters/minute. There is increasing interest in such systems, because they reduce sample sizes, reduce waste, and improve compatibility with other systems, for example High Performance Liquid Chromatography ("HPLC") systems.

Conventional pumping systems, which operate at relatively high flow rates, e.g. at least 0.1 ml/min, are described in for example J. Chrom. Sci., 12, 425, 432 (1974) by Mcnair et al, Rev. Sci. Instrum. 62, 1642-1646 (1991) by LeBlanc, and U.S. Patent No. 5,777, 213 (Tsukazaki). Such systems do not provide precise control at low flow rates, and respond slowly to adjustment of the flow rate. When such systems are used to produce low flow rates, the conventional procedure is to split off a small proportion of a much larger liquid flow (see for example Journal of Chromatography A, 856, 117-113 (1999) by Vissers).

US 5294929 A discloses a liquid chromatography method and apparatus where liquid is pumped from a chamber to an outlet under pressure. The liquid pressure is monitored at the outlet and then compared with a set point pressure. This information is used to control the pressure of the liquid at the outlet.

DE 19625648 A discloses a supercritical fluid chromatography system that employs a pneumatic amplifier pump, a pressure regulator and an electronic pressure control system.

US 3917531 A discloses a conventional liquid chromatography system which employs a pneumatic amplifier pump, a pressure regulator and a pressure control system.

### SUMMARY OF THE INVENTION

The invention is defined in claims 1 and 17, respectively. Particular embodiments are set out in the dependent claims.

The present invention provides a method and an apparatus for delivering liquids at low flow rates, for example in the range of about 1 nanoliter/minute to about 100 microliters/minute, and, if desired, varying the flow rate in a controlled manner.

This invention provides a method of supplying a liquid to a liquid outlet at a flow rate of less than about 100 microliters/minute, the method comprising
1) applying pressure from a first pressure source to a first liquid, thus causing the first liquid to flow through a first conduit;
2) detecting a first measured rate at which the first liquid is flowing through the first conduit;
3) comparing the first measured rate with a first desired rate of flow of the first liquid through the first conduit; and
4) using information obtained in step 3 to adjust the pressure applied to the first liquid by the first pressure source to adjust the rate at which the first liquid flows through the first conduit towards the first desired rate of flow;
wherein the first pressure source comprises a first pneumatic pressure source, a first pneumatic-to-hydraulic booster, a first pressure modulator which is located between the first pneumatic pressure supply and the first booster and which controls the pneumatic pressure supplied to the first booster, and a first pressure sensor which is located between the first pneumatic pressure supply and the first booster; step 2 is carried out by a first flowmeter which measures the rate at which the first liquid flows from the first booster to the liquid outlet; and steps 3 and 4 are carried out by a combination of a first inner servo-loop which communicates with the first pressure sensor and the first pressure modulator, and a first outer servo-loop which communicates with the first flowmeter and the first inner servo-loop, the first outer servo-loop comparing the first measured flowrate to the first desired flowrate and outputting a first pressure set point to the first inner servo-loop, and the first inner servo-loop instructing the first pressure modulator to adjust the first pneumatic pressure supply; and
wherein alternatively a liquid pressure sensor is located between the first booster and the first flowmeter, and the first inner servo loop communicates with the liquid pressure sensor and the first pressure modulator.

The method preferably having at least one of the following further characteristics:
5) applying pressure from a second pressure source to a second liquid, thus causing the second liquid to flow through a second conduit;
6) detecting a second measured rate at which the second liquid is flowing through the second conduit;
7) comparing the second measured rate with a second desired rate of flow of the second liquid through the second conduit;
8) using information obtained in step 7 to adjust the pressure applied to the second liquid by the second pressure source to adjust the rate at which the second liquid flows through the second conduit towards the second desired rate of flow;
9) mixing the first liquid from the first conduit with the second liquid from the second conduit; and
10) supplying the mixture obtained in step 9 to the liquid outlet.

The invention further provides an apparatus suitable for use in the method of the invention, this term being used to include liquid-filled apparatus which is in use, apparatus which must be filled with one or more liquids before it can be used, and novel components which must be assembled with other components before such apparatus is obtained.

### BRIEF DESCRIPTION OF THE DRAWINGS

The invention is illustrated in the accompanying schematic drawings, in which
- Figure 1: shows a system whose liquid outlet is connected, through an injection valve, to a separation column; and
- Figure 2-5: show different systems using different methods to control the flow of the liquid.

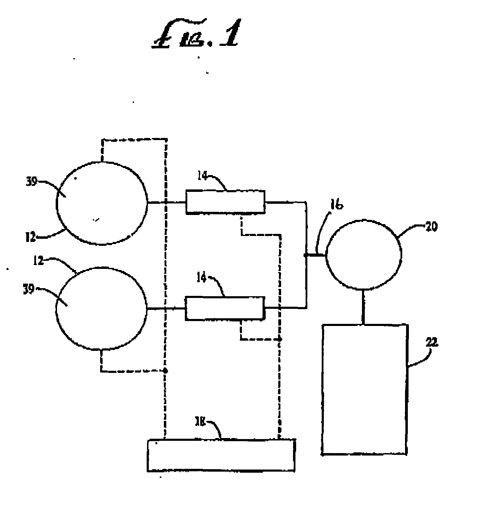

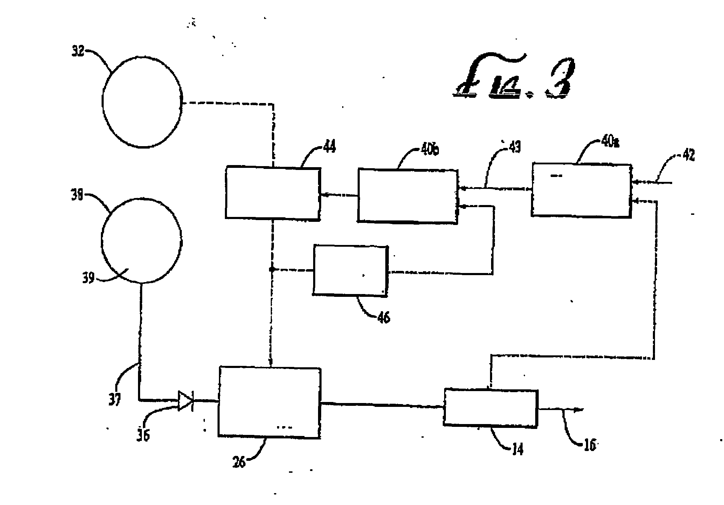

Therein Figures 1-2 serve for illustrating background of the invention and Figures 3-5 relate to embodiments of the invention.

### DETAILED DESCRIPTION THE INVENTION

In the Summary of the Invention above and in the Detailed Description of the Invention, the Examples, and the claims below, and in the accompanying drawings, reference is made to particular features of the invention. It is to be understood that the disclosure of the invention in this specification includes all appropriate combinations of such particular features. For example, where a particular feature is disclosed in the context of a particular aspect or embodiment of the invention, or a particular Figure, or a particular claim, that feature can also be used, to the extent appropriate, in combination with and/or in the context of other particular aspects and embodiments of the invention, and in the invention generally.

The term "comprises", and grammatical equivalents thereof, are used herein to mean that other components, ingredients, steps etc. are optionally present in addition to the component(s), ingredient(s), step(s) specifically listed after the term "comprises". The term "at least" followed by a number is used herein to denote the start of a range beginning with that number (which may be a range having an upper limit or no upper limit, depending on the slope, or any of the other forms known in the separation arts. Flow controllers and servo loops can be combined to provide more complicated liquid composition variations.

### Delay Volumes

The delay volume of the system, i.e. the volume of the liquid or mixture of liquids after the desired conditions (e.g. a mixture containing the liquids in the desired ratio) have been established and before the liquid is discharged from the liquid outlet, is preferably small, so that desired changes in the discharged liquid take place with little delay. The delay volume may be for example less than 1 microliter or 100 nL.

### Detecting Liquid Flow Rates

Any flow meter operating efficiently at the desired flow rates can be used to determine the rates at which the liquid is flowing through the conduit. Preferably the flowmeter provides a continuous signal over the whole range of desired flow rates, including liquid flow in both directions. Preferably the signal bandwidth of the flowmeter, i.e. the frequency corresponding to the minimum time between meaningful readings, is faster than 1 Hertz, particularly faster than 10 Hertz. Known flow meters include those disclosed in J. MEMS, 6, 119-125 (1997), by Enoksson et al.; thermal mass flow meters; thermal heat tracers as disclosed in US Patent No. 6,386,050; optical flow meters, for example those disclosed in Appl. Opt., 33, 6073-6077 (1994) by Carvalho et al.

A preferred flowmeter comprises a capillary tube through which the liquid flows, and one or more pressure sensors which measure the pressure drop across the capillary tube, either directly or by measuring the pressures at the ends of the tube and subtracting one measurement from the other. A capillary tube has a high hydraulic resistance, but a very low liquid volume, allowing rapid response. The capillary tube can be part of the conduit through which the liquid flows. The pressure sensor can be a pressure transducer, preferably one having a volume of at most 5 microliters. Preferably, the length and diameter of the capillary tube are such that the pressure drop across it is at least one of (a) 345 kPa (50 psi) and (b) at least 5% of the pressure applied to the liquid by the pressure source. The diameter of the capillary tube can be for example 35 to 65 microns, for example about 50 microns. Flow rates can be calculated in known manner from knowledge of the dimensions of the capillary tube and the properties of the liquid. For example, when the liquid is water, a pressure drop of about 3100 kPa (450 psi) through a capillary tube having a length of 10 cm and an internal diameter of 10 microns, indicates a flow rate of about 500 nL/min.

### Pressures, Pressure Sources and Flow Rates

Any pressure source can be used to drive the liquid or liquids in the system of the invention. Suitable pressure sources include electrokinetic pumps (e.g. as disclosed in US Patent No. 5,942,093), electrokinetic flow controllers (e.g. as disclosed in U.S. Patent application serial Nos. 09/942,884 and 10/155,474), mechanically activated pumps, pneumatically activated pumps, electropneumatic pumps with or without a hydraulic amplifier, and combinations thereof. Many current designs of positive displacement pumps, such as lead-screw driven pumps, do not have a sufficiently consistent output to provide desired precision at the low flow rates used in the present invention, but they may be useful in active flow rate feedback in future designs.

Some embodiments of the invention make use of pressure sources comprising a pneumatic-to-hydraulic booster in liquid connection with the liquid supply. Any known booster can be used, including a liquid head that uses a dynamic seal on a moving solid rod that displaces liquid, the rod being coupled to the shaft of a conventional pneumatic piston. The gain of the booster is typically greater than 1, but may also be equal to 1 (direct transfer of pressure with no amplification) or less than 1 for lower pressure applications.

There may be a check valve between the liquid supply and the booster so that liquid cannot flow from the booster to the liquid supply. There may be a pressure modulator between the primary power source, e.g. a pneumatic pressure source, and the booster. Any known pressure modulator can be used, including an electro-pneumatic controller in which an input current or voltage produces a command signal to one or more actuators within the controller. The actuator generally acts to increase or decrease the amount of air flow through the electro-pneumatic controller in order to maintain an output pressure proportional to the command signal. The system can include at least one servo-loop which is located between the flowmeter measuring the flow rate of the liquid and the pressure modulator, which compares the measured and desired flow rates, and which instructs the pressure modulator to adjust the pneumatic pressure supply so that the liquid flows at the desired rate.

Preferably, any change in the rates at which the first liquid flows through the first conduit results only from a change in the pressure applied to the first liquid by the first pressure source, and does not involve any mechanical change of the system. This feature, in combination with the fact that the measured flow rate is used to control the pressure applied to the liquid, reduces variability introduced by factors (if present all) such as check valve leakage, pump seal leakage, flexing and creep of mechanical seals, thermal expansion of components, and compression of liquids. When there are two (or more) liquids, the pressure sources controlling the liquid flows can be the same or different. Preferably the pressure source is continuously variable, is capable of providing flow rates in the range of 1 nL/minute to 10 µl/minute or 100 µl/minute into, for example, back pressures from about 100 kPa (1 atmosphere) up to 34500 kPa (5000 psi) or higher, e.g. 69000 kPa (10000 psi), and has a response time of seconds or less, e.g. less than 1 second, thus allowing rapid changes in flow rates. In electrokinetic pumps and flow controllers, the hydraulic resistance is high, but the compressible volume is very low, resulting in very rapid changes. Pneumatic booster pressure supplies have larger volumes, but the pistons have very low resistance to volumetric changes, once again allowing very rapid changes.

### Comparing Measured and Desired Liquid Flow Rates, and controlling the Pressure Source

The measured and desired liquid flow rates can be compared in any operable way, and the results used to control the pressure source(s) in any operable way. Preferably, the liquid flow rates are adjusted to compensate for volumetric changes of the mixture which will affect the flow rate. For example, the system can make use of a controller which computes the physical properties of the liquid upon which the volume depends, such as composition, temperature and pressure. For example, the composition and mixing ratio of both liquids can be input to the controller; the flowmeter can measure the pressure; and a thermocouple in communication with the controller can take the temperature measurement. Alternatively, the system can be temperature-controlled and the temperature communicated to the controller.

In some embodiments of the invention, at least one servo-loop controller (abbreviated herein to servo-loop) is used to control the liquid flows. The servo-loop can be of any type known in the art for example a PID loop, and can be constructed, for example, using discrete analog circuits, discrete digital circuits, dedicated microprocessors or a computer. In one class of such embodiments, the pressure source comprises a pneumatic pressure source, a pneumatic-to-hydraulic booster, and a pressure modulator which is located between the pneumatic pressure supply and the booster and which controls the amounts of pneumatic pressure supplied to the booster; the detection of the measured flow rate is carried out by a first flowmeter which measures the rate at which the liquid flows from the booster to the liquid outlet; and the comparison of the measured and desired rates of flow, and the use of the information obtained from that comparison to adjust the pressure applied to the liquid by the pressure source, are carried out by a servo-loop. In another class of such embodiments, the pressure source comprises a pneumatic pressure source, a pneumatic-to-hydraulic booster, a pressure modulator which is located between the pneumatic pressure supply and the booster and which controls the pneumatic pressure supplied to the booster, and a pressure sensor which is located between the pneumatic pressure supply and booster; the detection of the measured rate of liquid flow is carried out by a first flowmeter which measures the rate at which the liquid flows from the first booster to the liquid outlet; the comparison of the measured and desired flow rates is carried out by a combination of an inner servo-loop which communicates with the pressure sensor and the first pressure modulator, and an outer servo-loop which communicates with the flowmeter and the inner servo-loop, the outer servo-loop comparing the measured and desired flowrates and outputting a first pressure set point to the first inner servo-loop, and the inner servo-loop instructing the pressure modulator to adjust the pneumatic pressure supply.

### Response Times

It is desirable that the system should have a rapid response time, i.e. should respond rapidly to pressure changes initiated by changes in the desired flow rate. The term "response time" is used herein to denote the time taken to reach a flow rate which is within 5% of the desired flow rate. Preferably, the system has a response time of less than 1 second, particularly less than 0.6 second, even when there is a substantial change in the desired flow rate, for example a change from a first desired flowrate to a second desired flow rate which is from 0.3 to 3 times, preferably from 0.2 to 5 times, the first desired flow rate.

The time response of the system can be understood in terms of the hydraulic resistances and capacitances. As with an electronic circuit, the product of these two gives a characteristic time constant. The hydraulic capacitance in the disclosed systems is dominated by the volumes and compressibility of the liquid, but also includes contributions from sources such as the deflection of a diaphragm in a pressure transducer.

The capillary flow meter described previously has a reasonably high hydraulic resistance, but a very low liquid volume, allowing rapid response. The compressible liquid volume (leading to capacitance) in the systems shown in the Figures is preferably on the order of 5 microliters and is due to the pressure transducer mounting.

### Further Systems

The liquid outlet of the systems of the invention can be connected to any further liquid flow system requiring a low- volume liquid supply. Such further systems include for example gradient HPLC systems, mass spectrometer systems, flow injection systems, analysis systems, drug delivery systems, and chemical reactor systems. Many suitable further systems include columns with diameters from 50 µm to 1 mm (often referred to as capillary columns). The output of the column can be supplied to a detector. The detector can be for example a laser-induced fluorescence detector, an optical absorption detector, a refractive index or electrochemical detector, a mass spectrometer, or NMR spectrometer, or any other detector known in the HPLC arts. The liquid flow rate in capillary systems typically ranges up from nanoliters per minute ("nL/min") to 100 microliters per minute ("µl/min") and may be less than 10 microliters per minute. Precise control of the flow rate in such systems is important, for example so that analyte retention times (and, therefore, analyte identification) can be reliably predicted, and so that false analyte signals can be avoided.

Flow control is particularly important for gradient separations, in which the liquid composition is varied during the course of the separation. In gradient HPLC, the liquid outputs from two (or more) sources are combined to provide a desired flow rate of known and varying composition.

Two or more systems of the invention can be run in parallel from common sources of liquids to perform multiple operations, for example separations, in parallel.

### The Drawings

Figure 1 shows a system of the invention comprising two variable pressure liquid supplies 12, each supplying a liquid 39 (the liquids from the two supplies being different), and a flowmeter 14 for each liquid 39. After passing through the flow meters, the liquids are mixed together, and the mixture exits through a liquid outlet 16. Each of the flow meters sends signals to a controller 18, which adjusts the pressures of the liquid supplies 12 so that the mixture contains desired proportions of the liquids 39 and flows out of the liquid outlet 16 at a desired flow rate less than 100 microliters/minute, for example less than 10 microliters/minute. The liquid outlet 16 is connected through an injection valve 20 to an HPLC separation column 22.

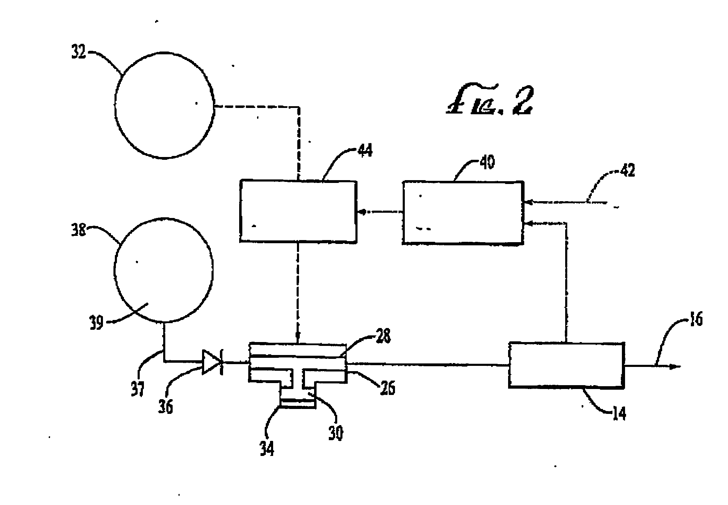

Figure 2 shows a system on the invention comprising a pneumatic pressure supply 32 which is connected through a pressure modulator 44 to a pneumatic-to-hydraulic booster 26. The booster 26 comprises two coupled pistons 28 and 30 and a cylinder 34 containing liquid 39 which is forced from the booster by a pressure which is controlled by varying the pneumatic pressure applied to the piston 28. The gain of the booster is proportional to the ratio of the first piston area to the second piston area. The cylinder 34 can be refilled by withdrawing the second piston 30 and pulling fresh liquid from a liquid supply 38 through a liquid inlet 37 and a check valve 36. The flow rate of the liquid is measured by a flowmeter 14 and is input to a servo-loop controller 40. A desired flow rate is input to the servo-loop controller 40 through a set-point input 42. The servo-loop controller 40 then compares the measured flow rate to the desired flow rate and, if the measured flow rate does not equal the desired flow rate, instructs the pressure modulator 44 to adjust the pneumatic pressure to the first piston 28 of the booster 26 to achieve the desired liquid flow rate.

The liquid source 38, the check valve 36, the pressure supply 32, the pressure modulator 44, and the pneumatic-to-hydraulic booster 26 can make up one of the variable pressure liquid supplies 12 of Fig. 1. The servo-loop controller 40 and set-point input 42 can make up the controller 18 of Fig. 1.

Figure 3 shows a system similar to that shown in Figure 2, but employing two nested servo loops as the controller. An outer servo-loop 40a compares the measured flow rate to the desired flow rate then outputs a pressure setpoint 43 to an inner servo-loop 40b. A gas pressure sensor 46 measures the pneumatic pressure applied to the first piston 28 of the booster 26. The measured pneumatic pressure is input to the inner servo-loop 40b controller as well as the pressure setpoint 43 from the outer servo-loop controller 40a. If the measured flow rate is not the desired flow rate, the inner servo-loop 40b instructs the pressure modulator 44 to adjust the pneumatic pressure applied to the first piston 28 of the booster 26.

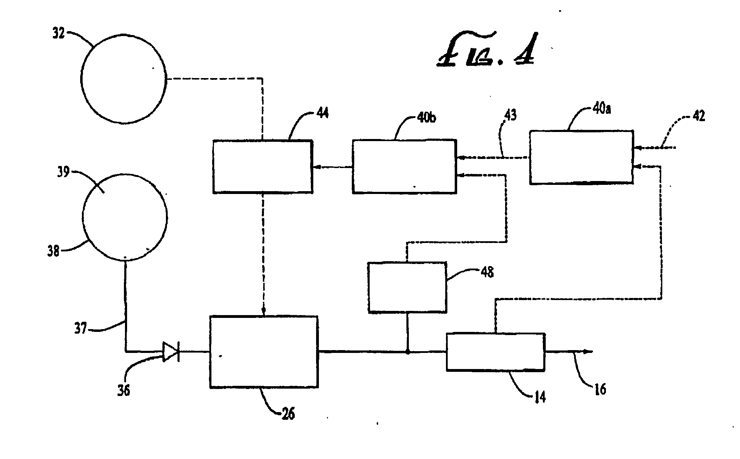

Figure 4 shows a system similar to that shown in Figure 3 in which one of the inner servo-loop 40b inputs is the measured liquid pressure from a liquid pressure sensor 48 located between the booster 26 and the flowmeter 14.

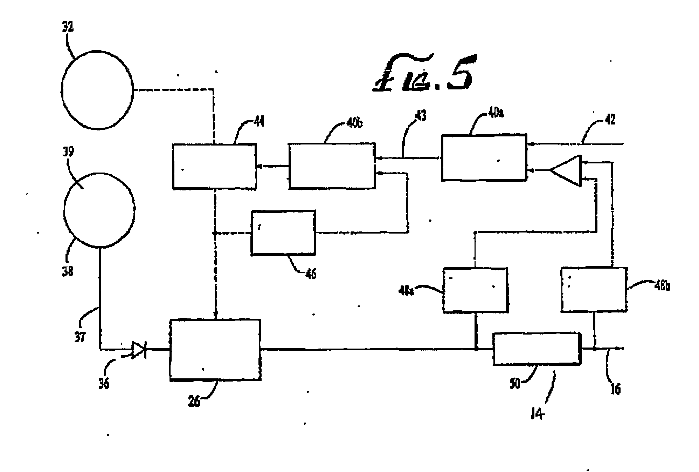

Figure 5 shows a system similar to that shown in Figure 3 in which the flowmeter 14 comprises a capillary tube 50 and first and second pressure sensors 48a and 48b, located at either end of the tube. The flow rate is calculated using the measured pressure difference across the known flow conductance of the tube 50. In another arrangement, the first pressure sensor 48a of the flowmeter 14 can provide input to the inner servo-loop 40b.

Wherein a controlled mixture of liquids is require, two (or more) systems of the invention, each of which may be as described in one of Figures 2-5 and which may be the same or different, can supply different liquids which are mixed before they reach the liquid outlet. The systems can, if appropriate, share one or more components. For example, when two systems as shown in Figure 5 are used, they can make use of a shared pressure sensor 48b.

### Example 1

A system as shown in Figure 5 was prepared, and the setpoint was set to a constant value of 2700 nL/min over 50 minutes. In this system, the pressure modulator 44 was an electro-pneumatic controller Control Air 900-EHD, the pneumatic-to-hydraulic booster 26 was Haskel MS-36, and the pump liquid was deionized water. Each of the pressure sensors 48a and 48b was an Entran EPX transducer. The transducers were at either end of a 10 cm length of a 10 µm ID capillary tube 50. The pressure drop across the capillary tube was about 690 kPa (100 psi). The flow rate was calculated by a microprocessor. The resulting metered flow of liquid was accurate within 0.02 %> of its setpoint over a period of 50 minutes, i.e. a flow rate accuracy of 0.56 nL/min RMS.

### Example 2

A system was prepared using two systems as shown in Figure 5 connected to the same liquid outlet, and sharing a pressure sensor 48b. The flow profile was a 20 minute constant gradient delivery of the first and second liquids, which were water and acetonitrile, varying between 100 and 300 nL/min, with a 1 minute period of constant flow at the beginning and end of the test. Thus, the two liquids were mixed in concentrations ranging from 25% to 75% over the duration of the test, and at a total constant flow rate of 400 nL/min into the column. The measured flow rate from each controller indicated accuracy within 0.28 nL/min RMS of the setpoint over the full range of the test conditions.

## Claims

1. A method of supplying a liquid to a liquid outlet (16) at a flow rate of less than 100 micro liters/minute, the method comprising
1) applying pressure from a first pressure source (12) to a first liquid (39), thus causing the first liquid to flow through a first conduit;
2) detecting a first measured rate at which the first liquid is flowing through the first conduit;
3) comparing the first measured rate with a first desired rate of flow of the first liquid through the first conduit; and
4) using information obtained in step 3 to adjust the pressure applied to the first liquid by the first pressure source (12) to adjust the rate at which the first liquid flows through the first conduit towards the first desired rate of flow;
wherein the first pressure source (12) comprises a first pneumatic-to-hydraulic booster (26), a first pneumatic pressure source (32) and a first pressure modulator (44) which is located between the first pneumatic pressure source (32) and the first booster (26) and which controls the amount of pneumatic pressure supplied to the first booster (26); and
wherein step 2 is carried out by a first flowmeter (14) which measures the rate at which the first liquid flows from the first booster (26) to the liquid outlet (16),
**characterized in that**
a gas pressure sensor (46) is located between the first pneumatic pressure source (32) and the first booster (26), or a liquid pressure sensor (48) is located between the first booster (26) and the flowmeter (14);
wherein steps 3 and 4 are carried out by a combination of
a first inner servo-loop (40b) which communicates with the gas pressure sensor (46) or the liquid pressure sensor (48) and with the first pressure modulator (44), and
a first outer servo-loop (40a) which communicates with the first flowmeter (14) and the first inner servo-loop (40b),
the first outer servo-loop (40a) comparing the first measured flowrate to the first desired flowrate and outputting a first pressure set point to the first inner servo-loop (40b), and the first inner servo-loop (40b) instructing the first pressure modulator (44) to adjust the first pneumatic pressure source (32).

2. A method according to claim 1, wherein the first conduit has a diameter of between 10 µm and 65 µm and the first liquid is supplied to the liquid outlet (16) at a flow rate of less than 100 micro liters/minute.

3. A method according to claim 1 or 2, wherein the method includes:
5) applying pressure from a second pressure source (12) to a second liquid (39), thus causing the second liquid to flow through a second conduit;
6) detecting a second measured rate at which the second liquid is flowing through the second conduit;
7) comparing the second measured rate with a second desired rate of flow of the second liquid through the second conduit;
8) using Information obtained in step 7 to adjust the pressure applied to the second liquid by the second pressure source (12) to adjust the rate at which the second liquid flows through the second conduit towards the second desired rate of flow;
9) mixing the first liquid from the first conduit with the second liquid from the second conduit; and
10) supplying the mixture obtained in step 9 to the liquid outlet (16);

4. A method according to any one of claims 1 to 3, wherein the system has a response time, when the desired rate changes from a first value equal to the first measured rate to a second value which is from 0.2 to 5 times the first measured rate, of less than 1 second.

5. A method according to any one of claims 1 to 4, wherein step 2 is carried out using the flowmeter (14) comprising
(i) a first capillary tube whose length and diameter are such that the pressure drop across the first capillary tube (50) is at least one of (a) 350kPa (50 psi) and (b) at least 5% of the pressure applied to the first liquid by the first pressure source (32), and
(ii) first and second pressure sensors (48a-b) which measure the pressure drop across the first capillary tube (50).

6. A method according to claim 5, wherein the capillary tube (50) is part of the first conduit.

7. A method according to any of claims 1 to 6, wherein any change in the rate at which the first liquid flows through the first conduit (16) results solely from a change in the pressure applied to the first liquid by the first pressure source (32).

8. A method according to any of claims 3 to 7, wherein the second pressure source (32) comprises e second pneumatic-to-hydraulic booster (26), and step 8 is carried out by a servo-loop (40) connected to the second booster (26).

9. A method according to any of claims 3 to 7, wherein the second pressure source (12) comprises
a second pneumatic pressure source (32), a second pneumatic-to-hydraulic booster (26), and a second pressure modulator (44) which is located between the second pneumatic pressure source (32) and the second booster (26) and which controls the amounts of pneumatic pressure supplied to the second booster (26);
wherein step 6 is carried out by a second flowmeter (14) which measures the rate at which the second liquid flows from the second booster (26) to the liquid outlet (16); and
wherein steps 7 and 8 are carried out by a second inner servo-loop (40a) which instructs the second pressure modulator (44).

10. A method according to any of claims 3 to 7, wherein
the second pressure source (12) comprises a second pneumatic pressure source (32), a second pneumatic-to-hydraulic booster (26), a second pressure modulator (44) which is located between the second pneumatic pressure source (32) and the second booster (26) and which controls the pneumatic pressure supplied to the second booster (26), and a second pressure sensor (46) which is located between the second pneumatic pressure source (32) and the second booster (26);
wherein step 6 is carried out by a second flowmeter (14) which measures the rate at which the second liquid flows from the second booster (26) to the liquid outlet (16); and
wherein steps 7 and 8 are carried out by a combination of a second inner servo-loop (40b) which communicates with the second pressure sensor (46) and the second pressure modulator (44), and a second outer servo-loop (40a) which communicates with the second flowmeter (14) and the second inner servo-loop (40b), the second outer servo-loop (40a) comparing the second measured flowrate to the second desired flowrate and outputting a second pressure set point to the second inner servo-loop (40b), and the second inner servo-loop (40b) instructing the second pressure modulator (44) to adjust the second pneumatic pressure source (32).

11. A method according to any of claims 3 to 7, wherein the second pressure source (32) comprises pressure generated by an electrokinetic pump or an electrokinetic flow controller or both.

12. A method according to any of claims 3 to 11, wherein the time taken to adjust the flow rate of the second liquid from the second measured rate to the second desired rate is less than 1 second.

13. A method according to any of claims 3 to 12, wherein step 6 is carried out using the flowmeter (14) comprising
(i) a second capillary tube (50) whose length and diameter are such that the pressure drop across the second capillary tube (50) is at least one of (a) 350kPa (50 psi) and (b) at least 5% of the pressure applied to the second liquid by the second pressure source, and
(ii) first and second pressure sensors (48a-b) which measure the pressure drop across the second capillary tube (50).

14. A method according to any of claims 3 to 13, wherein the first and second desired flow rates vary as a function of time, and the sum of the first and second desired flow rates remains substantially constant.

15. A method according to any one of claims 1 to 14, wherein the liquid is supplied to the liquid outlet (16) at the flow rate of less than 10 microliters/minute.

16. A method according to any one of claims 1 to 15, wherein the liquid outlet (16) is in fluid communication with a liquid chromatography column having a diameter of between 50 µm and 1 mm.

17. An apparatus suitable for carrying out the method of any of claims 1 to 16, the apparatus comprising
(a) first and second liquid inlets (37) of respective first and second liquid conduits;
(b) a liquid outlet (16) in liquid communication with the first and second liquid inlets;
(c) first and second pneumatic pressure sources (32);
(d) a first pneumatic-to-hydraulic booster (26) located between the first liquid inlet (37) and the liquid outlet (16) and in operative communication with the first pneumatic pressure source (32), whereby the first pneumatic to hydraulic booster (26) forces liquid out through the liquid outlet (16);
(e) a second pneumatic-to-hydraulic booster (26) located between the second liquid inlet (37) and the liquid outlet (16) and in operative communication with the second pneumatic pressure source (32), whereby the second pneumatic to hydraulic booster (26) forces liquid out through the liquid outlet (16);
(f) a first pressure modulator (44) located between the first pneumatic pressure source (32) and the first pneumatic to hydraulic booster (26), wherein the first pressure modulator (44) controls the amount of pneumatic pressure supplied to the first pneumatic-to-hydraulic booster (26);
(g) a second pressure modulator (44) located between the second pneumatic pressure source (32) and the second pneumatic to hydraulic booster (26), whereby the second pressure modulator (44) controls the amount of pneumatic pressure supplied to the second pneumatic to hydraulic booster (26);
(h) a first flowmeter (14) which is located between the first pneumatic-to-hydraulic booster (26) and the liquid outlet (16) and which can measure the flow rate of a first liquid flowing from the first booster (26) to the liquid outlet (16);
(i) a second flowmeter (14) which is located between the second pneumatic-to-hydraulic booster (26) and the liquid outlet (16) and which can measure the flow rate of a second liquid flowing from the second booster (26) to the liquid outlet (16);
(j) a first outer servo-loop controller (40a) in communication with the first flowmeter (14) and the first pressure modulator (44), whereby the first outer servo-loop controller (40a) compares the measured flow rate of the first liquid to a first desired flow rate and instructs the first pressure modulator (44) to adjust the first pneumatic pressure source (32) so that the first liquid flows out of the liquid outlet (16) at the first desired flow rate;
(k) a second outer servo-loop controller (40a) in communication with the second flowmeter (14) and the second pressure modulator (44), whereby the second outer servo- loop controller (40a) compares the measured flow rate of the second liquid to a second desired flow rate and instructs the second pressure modulator (44) to adjust the second pneumatic pressure source (32) so that the second liquid flows out of the liquid outlet (16) at the first desired flow rate;
the apparatus further comprising:
a gas pressure sensor (46) located between the first pneumatic pressure source (32) and the first pneumatic to hydraulic booster (26), or a liquid pressure sensor (48) located between the first booster (26) and the flowmeter (14), and
a first inner servo-loop controller (40b) in communication with the first pressure sensor (46) or the liquid pressure sensor (48) and with the first pressure modulator (44),
wherein the first outer servo-loop controller (40a) outputs to the first inner servo-loop controller (40b) a first pneumatic pressure set point based on a comparison of the measured flow rate of the first liquid with the first desired flow rate, and wherein the first inner servo-loop controller (40b) instructs the first pressure modulator (44) to adjust the first pneumatic pressure source (32) if the first measured flow rate is not the first desired flow rate;
a gas pressure sensor (46) located between the second pneumatic pressure source (32) and the second pneumatic to hydraulic booster (26), or a liquid pressure sensor (48) is located between the first booster (26) and the flowmeter (14), and
a second inner servo-loop controller (40b) in communication with the second pressure sensor (46) or the liquid pressure sensor (48) and with the second pressure modulator (44),
wherein the second outer servo-loop controller (40a) outputs to the second inner servo-loop controller (40b) a second pneumatic pressure set point based on a comparison of the measured flow rate of the second liquid with the second desired flow rate, and wherein the second inner servo-loop controller (40b) instructs the second pressure modulator (44) to adjust the second pneumatic pressure source (32) if the second measured flow rate is not the second desired flow rate.

18. An apparatus according to claim 17, wherein the liquid outlet (16) is in communication with a liquid chromatography column having a diameter between 50 µm and 1 mm.

## Patentansprüche

1. Ein Verfahren zum Zuführen einer Flüssigkeit zu einem Flüssigkeitsauslass (16) mit einer Durchflussrate von weniger als 100 Mikrolitern/Minute, wobei das Verfahren aufweist:
1) Anlegen eines Drucks von einer ersten Druckquelle (12) an eine erste Flüssigkeit (39), wobei somit bewirkt wird, dass die erste Flüssigkeit durch eine erste Leitung fließt;
2) Erfassen einer ersten gemessenen Rate, mit der die erste Flüssigkeit durch die erste Leitung fließt;
3) Vergleichen der ersten gemessenen Rate mit einer ersten gewünschten Durchflussrate der ersten Flüssigkeit durch die erste Leitung; und
4) Verwenden von Informationen, die in Schritt 3 erhalten werden, um den an die erste Flüssigkeit durch die erste Druckquelle (12) angelegten Druck einzustellen, um die Rate, mit der die erste Flüssigkeit durch die erste Leitung fließt, in Richtung der ersten gewünschten Durchflussrate einzustellen;
wobei die erste Druckquelle (12) aufweist: einen ersten pneumatisch-hydraulischen Verstärker (26), eine erste pneumatische Druckquelle (32) und einen ersten Druckmodulator (44), der zwischen der ersten pneumatischen Druckquelle (32) und dem ersten Verstärker (26) angeordnet ist und der die Stärke des pneumatischen Drucks steuert, der zum ersten Verstärker (26) geliefert wird; und
wobei Schritt 2 durch einen ersten Durchflussmesser (14) ausgeführt wird, der die Rate misst, mit der die erste Flüssigkeit vom ersten Verstärker (26) zum Flüssigkeitsauslass (16) fließt,
**dadurch gekennzeichnet, dass**
ein Gasdrucksensor (46) zwischen der ersten pneumatischen Druckquelle (32) und dem ersten Verstärker (26) angeordnet ist, oder ein Flüssigkeitsdrucksensor (48) zwischen dem ersten Verstärker (26) und dem Durchflussmesser (14) angeordnet ist;
wobei die Schritte 3 und 4 ausgeführt werden durch eine Kombination von
einer ersten inneren Servoschleife (40b), die mit dem Gasdrucksensor (46) oder dem Flüssigkeitsdrucksensor (48) und mit dem ersten Druckmodulator (44) kommuniziert, und
einer ersten äußeren Servoschleife (40a), die mit dem ersten Durchflussmesser (14) und der ersten inneren Servoschleife (40b) kommuniziert,
wobei die erste äußere Servoschleife (40a) die erste gemessene Durchflussrate mit der ersten gewünschten Durchflussrate vergleicht und einen ersten Drucksollwert an die erste innere Servoschleife (40b) ausgibt, und die erste innere Servoschleife (40b) den ersten Druckmodulator (44) anweist, die erste pneumatische Druckquelle (32) einzustellen.

2. Ein Verfahren nach Anspruch 1, wobei die erste Leitung einen Durchmesser zwischen 10 µm und 65 µm hat und die erste Flüssigkeit zum Flüssigkeitsauslass (16) mit einer Durchflussrate von weniger als 100 Mikrolitern/Minute zugeführt wird.

3. Ein Verfahren nach Anspruch 1 oder 2, wobei das Verfahren umfasst:
5) Anlegen eines Drucks von einer zweiten Druckquelle (12) an eine zweite Flüssigkeit (39), wobei somit bewirkt wird, dass die zweite Flüssigkeit durch eine zweite Leitung fließt;
6) Erfassen einer zweiten gemessenen Rate, mit der die zweite Flüssigkeit durch die zweite Leitung fließt;
7) Vergleichen der zweiten gemessenen Rate mit einer zweiten gewünschten Durchflussrate der zweiten Flüssigkeit durch die zweite Leitung;
8) Verwenden von in Schritt 7 erhaltenen Informationen, um den an die zweite Flüssigkeit durch die zweite Druckquelle (12) angelegten Druck einzustellen, um die Rate, mit der die zweite Flüssigkeit durch die zweite Leitung fließt, in Richtung der zweiten gewünschten Durchflussrate einzustellen;
9) Mischen der ersten Flüssigkeit von der ersten Leitung mit der zweiten Flüssigkeit von der zweiten Leitung; und
10) Zuführen des in Schritt 9 erhaltenen Gemisches zum Flüssigkeitsauslass (16).

4. Ein Verfahren nach einem der Ansprüche 1 bis 3, wobei das System eine Ansprechzeit von weniger als 1 Sekunde hat, wenn sich die gewünschte Rate ändert von einem ersten Wert gleich der ersten gemessenen Rate auf einen zweiten Wert, der 0,2 bis 5 mal die erste gemessene Rate ist.

5. Ein Verfahren nach einem der Ansprüche 1 bis 4, wobei Schritt 2 unter Verwendung des Durchflussmessers (14) ausgeführt wird, der aufweist
(i) ein erstes Kapillarrohr, dessen Länge und Durchmesser derart sind, dass der Druckabfall über das erste Kapillarrohr (50) mindestens einer ist von (a) 350 kPa (50 psi) und (b) mindestens 5 % des an die erste Flüssigkeit durch die erste Druckquelle (32) angelegten Drucks, und
(ii) einen ersten und einen zweiten Drucksensor (48a-b), die den Druckabfall über das erste Kapillarrohr (50) messen.

6. Ein Verfahren nach Anspruch 5, wobei das Kapillarrohr (50) ein Teil der ersten Leitung ist.

7. Ein Verfahren nach einem der Ansprüche 1 bis 6, wobei irgendeine Änderung der Rate, mit der die erste Flüssigkeit durch die erste Leitung (16) fließt, sich nur aus einer Änderung des an die erste Flüssigkeit durch die erste Druckquelle (32) angelegten Drucks ergibt.

8. Ein Verfahren nach einem der Ansprüche 3 bis 7, wobei die zweite Druckquelle (32) einen zweiten pneumatisch-hydraulischen Verstärker (26) aufweist und Schritt 8 durch eine mit dem zweiten Verstärker (26) verbundene Servoschleife (40) ausgeführt wird.

9. Ein Verfahren nach einem der Ansprüche 3 bis 7, wobei die zweite Druckquelle (12) aufweist
eine zweite pneumatische Druckquelle (32), einen zweiten pneumatisch-hydraulischen Verstärker (26) und einen zweiten Druckmodulator (44), der zwischen der zweiten pneumatischen Druckquelle (32) und dem zweiten Verstärker (26) angeordnet ist und der die Stärke des pneumatischen Drucks, der zum zweiten Verstärker (26) geliefert wird, steuert;
wobei Schritt 6 durch einen zweiten Durchflussmesser (14) ausgeführt wird, der die Rate misst, mit der die zweite Flüssigkeit vom zweiten Verstärker (26) zum Flüssigkeitsauslass (16) fließt; und
wobei die Schritte 7 und 8 durch eine zweite innere Servoschleife (40a) ausgeführt werden, die den zweiten Druckmodulator (44) anweist.

10. Ein Verfahren nach einem der Ansprüche 3 bis 7, wobei
die zweite Druckquelle (12) aufweist: eine zweite pneumatische Druckquelle (32), einen zweiten pneumatisch-hydraulischen Verstärker (26), einen zweiten Druckmodulator (44), der zwischen der zweiten pneumatischen Druckquelle (32) und dem zweiten Verstärker (26) angeordnet ist und der den zum zweiten Verstärker (26) gelieferten pneumatischen Druck steuert, und einen zweiten Drucksensor (46), der zwischen der zweiten pneumatischen Druckquelle (32) und dem zweiten Verstärker (26) angeordnet ist;
wobei Schritt 6 durch einen zweiten Durchflussmesser (14) ausgeführt wird, der die Rate misst, mit der die zweite Flüssigkeit vom zweiten Verstärker (26) zum Flüssigkeitsauslass (16) fließt; und
wobei die Schritte 7 und 8 ausgeführt werden durch eine Kombination einer zweiten inneren Servoschleife (40b), die mit dem zweiten Drucksensor (46) und dem zweiten Druckmodulator (44) kommuniziert, und einer zweiten äußeren Servoschleife (40a), die mit dem zweiten Durchflussmesser (14) und der zweiten inneren Servoschleife (40b) kommuniziert, wobei die zweite äußere Servoschleife (40a) die zweite gemessene Durchflussrate mit der zweiten gewünschten Durchflussrate vergleicht und einen zweiten Drucksollwert an die zweite innere Servoschleife (40b) ausgibt, und die zweite innere Servoschleife (40b) den zweiten Druckmodulator (44) anweist, die zweite pneumatische Druckquelle (32) einzustellen.

11. Ein Verfahren nach einem der Ansprüche 3 bis 7, wobei die zweite Druckquelle (32) einen Druck aufweist, der durch eine elektrokinetische Pumpe oder einen elektrokinetischen Durchflussregler oder beide erzeugt wird.

12. Ein Verfahren nach einem der Ansprüche 3 bis 11, wobei die Zeit, die es dauert, die Durchflussrate der zweiten Flüssigkeit von der zweiten gemessenen Rate auf die zweite gewünschte Rate einzustellen, geringer als 1 Sekunde ist.

13. Ein Verfahren nach einem der Ansprüche 3 bis 12, wobei Schritt 6 unter Verwendung des Durchflussmessers (14) ausgeführt wird, der aufweist
(i) ein zweites Kapillarrohr (50), dessen Länge und Durchmesser derart sind, dass der Druckabfall über das zweite Kapillarrohr (50) mindestens einer von (a) 350 kPa (50 psi) und (b) mindestens 5 % des an die zweite Flüssigkeit durch die zweite Druckquelle angelegten Drucks ist, und
(ii) einen ersten und einen zweiten Drucksensor (48a-b), die den Druckabfall über das zweite Kapillarrohr (50) messen.

14. Ein Verfahren nach einem der Ansprüche 3 bis 13, wobei die erste und die zweite gewünschte Durchflussrate als Funktion der Zeit variieren und die Summe der ersten und der zweiten gewünschten Durchflussrate im Wesentlichen konstant bleibt.

15. Ein Verfahren nach einem der Ansprüche 1 bis 14, wobei die Flüssigkeit zum Flüssigkeitsauslass (16) mit der Durchflussrate von weniger als 10 Mikrolitern/Minute zugeführt wird.

16. Ein Verfahren nach einem der Ansprüche 1 bis 15, wobei der Flüssigkeitsauslass (16) mit einer Flüssigchromatographiesäule mit einem Durchmesser zwischen 50 µm und 1 mm in Fluidverbindung steht.

17. Eine Vorrichtung, die zum Ausführen des Verfahrens nach einem der Ansprüche 1 bis 16 geeignet ist, wobei die Vorrichtung aufweist
(a) einen ersten und einen zweiten Flüssigkeitseinlass (37) einer jeweiligen ersten und zweiten Flüssigkeitsleitung;
(b) einen Flüssigkeitsauslass (16) in Flüssigkeitsverbindung mit dem ersten und dem zweiten Flüssigkeitseinlass;
(c) eine erste und eine zweite pneumatische Druckquelle (32);
(d) einen ersten pneumatisch-hydraulischen Verstärker (26), der zwischen dem ersten Flüssigkeitseinlass (37) und dem Flüssigkeitsauslass (16) und in wirksamer Verbindung mit der ersten pneumatischen Druckquelle (32) angeordnet ist, wodurch der erste pneumatisch-hydraulische Verstärker (26) Flüssigkeit durch den Flüssigkeitsauslass (16) nach außen drängt;
(e) einen zweiten pneumatisch-hydraulischen Verstärker (26), der zwischen dem zweiten Flüssigkeitseinlass (37) und dem Flüssigkeitsauslass (16) und in wirksamer Verbindung mit der zweiten pneumatischen Druckquelle (32) angeordnet ist, wodurch der zweite pneumatisch-hydraulische Verstärker (26) Flüssigkeit durch den Flüssigkeitsauslass (16) nach außen drängt;
(f) einen ersten Druckmodulator (44), der zwischen der ersten pneumatischen Druckquelle (32) und dem ersten pneumatisch-hydraulischen Verstärker (26) angeordnet ist, wobei der erste Druckmodulator (44) die Stärke des pneumatischen Drucks steuert, der zum ersten pneumatisch-hydraulischen Verstärker (26) geliefert wird;
(g) einen zweiten Druckmodulator (44), der zwischen der zweiten pneumatischen Druckquelle (32) und dem zweiten pneumatisch-hydraulischen Verstärker (26) angeordnet ist, wodurch der zweite Druckmodulator (44) die Stärke des pneumatischen Drucks steuert, der zum zweiten pneumatisch-hydraulischen Verstärker (26) geliefert wird;
(h) einen ersten Durchflussmesser (14), der zwischen dem ersten pneumatisch-hydraulischen Verstärker (26) und dem Flüssigkeitsauslass (16) angeordnet ist und der die Durchflussrate einer ersten Flüssigkeit, die vom ersten Verstärker (26) zum Flüssigkeitsauslass (16) fließt, messen kann;
(i) einen zweiten Durchflussmesser (14), der zwischen dem zweiten pneumatisch-hydraulischen Verstärker (26) und dem Flüssigkeitsauslass (16) angeordnet ist und der die Durchflussrate einer zweiten Flüssigkeit, die vom zweiten Verstärker (26) zum Flüssigkeitsauslass (16) fließt, messen kann;
(j) eine Steuereinheit (40a) einer ersten äußeren Servoschleife in Kommunikation mit dem ersten Durchflussmesser (14) und dem ersten Druckmodulator (44), wodurch die Steuereinheit (40a) der ersten äußeren Servoschleife die gemessene Durchflussrate der ersten Flüssigkeit mit einer ersten gewünschten Durchflussrate vergleicht und den ersten Druckmodulator (44) anweist, die erste pneumatische Druckquelle (32) einzustellen, so dass die erste Flüssigkeit aus dem Flüssigkeitsauslass (16) mit der ersten gewünschten Durchflussrate fließt;
(k) eine Steuereinheit (40a) einer zweiten äußeren Servoschleife in Kommunikation mit dem zweiten Durchflussmesser (14) und dem zweiten Druckmodulator (44), wodurch die Steuereinheit (40a) der zweiten äußeren Servoschleife die gemessene Durchflussrate der zweiten Flüssigkeit mit einer zweiten gewünschten Durchflussrate vergleicht und den zweiten Druckmodulator (44) anweist, die zweite pneumatische Druckquelle (32) einzustellen, so dass die zweite Flüssigkeit aus dem Flüssigkeitsauslass (16) mit der ersten gewünschten Durchflussrate fließt;
wobei die Vorrichtung ferner aufweist:
einen Gasdrucksensor (46), der zwischen der ersten pneumatischen Druckquelle (32) und dem ersten pneumatisch-hydraulischen Verstärker (26) angeordnet ist, oder einen Flüssigkeitsdrucksensor (48), der zwischen dem ersten Verstärker (26) und dem Durchflussmesser (14) angeordnet ist, und
eine Steuereinheit (40b) einer ersten inneren Servoschleife in Kommunikation mit dem ersten Drucksensor (46) oder dem Flüssigkeitsdrucksensor (48) und mit dem ersten Druckmodulator (44),
wobei die Steuereinheit (40a) der ersten äußeren Servoschleife an die Steuereinheit (40b) der ersten inneren Servoschleife einen ersten pneumatischen Drucksollwert auf der Basis eines Vergleichs der gemessenen Durchflussrate der ersten Flüssigkeit mit der ersten gewünschten Durchflussrate ausgibt, und wobei die Steuereinheit (40b) der ersten inneren Servoschleife den ersten Druckmodulator (44) anweist, die erste pneumatische Druckquelle (32) einzustellen, wenn die erste gemessene Durchflussrate nicht die erste gewünschte Durchflussrate ist;
einen Gasdrucksensor (46), der zwischen der zweiten pneumatischen Druckquelle (32) und dem zweiten pneumatisch-hydraulischen Verstärker (26) angeordnet ist, oder einen Flüssigkeitsdrucksensor (48), der zwischen dem ersten Verstärker (26) und dem Durchflussmesser (14) angeordnet ist, und
eine Steuereinheit (40b) einer zweiten inneren Servoschleife in Kommunikation mit dem zweiten Drucksensor (46) oder dem Flüssigkeitsdrucksensor (48) und mit dem zweiten Druckmodulator (44),
wobei die Steuereinheit (40a) der zweiten äußeren Servoschleife an die Steuereinheit (40b) der zweiten inneren Servoschleife einen zweiten pneumatischen Drucksollwert auf der Basis eines Vergleichs der gemessenen Durchflussrate der zweiten Flüssigkeit mit der zweiten gewünschten Durchflussrate ausgibt, und wobei die Steuereinheit (40b) der zweiten inneren Servoschleife den zweiten Druckmodulator (44) anweist, die zweite pneumatische Druckquelle (32) einzustellen, wenn die zweite gemessene Durchflussrate nicht die zweite gewünschte Durchflussrate ist.

18. Eine Vorrichtung nach Anspruch 17, wobei der Flüssigkeitsauslass (16) mit einer Flüssigchromatographiesäule mit einem Durchmesser zwischen 50 µm und 1 mm in Verbindung steht.

## Revendications

1. Procédé de fourniture d'un liquide à un orifice de sortie de liquide (16) à un débit inférieur à 100 microlitres/minute, le procédé comprenant
1) une application d'une pression provenant d'une première source de pression (12) à un premier liquide (39), amenant ainsi le premier liquide à s'écouler à travers un premier conduit ;
2) une détection d'un premier débit mesuré auquel le premier liquide s'écoule à travers le premier conduit ;
3) une comparaison du premier débit mesuré avec un premier débit d'écoulement désiré du premier liquide à travers le premier conduit ; et
4) une utilisation d'informations obtenues à l'étape 3 pour ajuster la pression appliquée au premier liquide par la première source de pression (12) pour ajuster le débit auquel le premier liquide s'écoule à travers le premier conduit par rapport au premier débit d'écoulement désiré ;
dans lequel la première source de pression (12) comprend un premier surpresseur pneumatique/hydraulique (26), une première source de pression pneumatique (32) et un premier modulateur de pression (44) qui est situé entre la première source de pression pneumatique (32) et le premier surpresseur (26) et qui régule la quantité de pression pneumatique appliquée au premier surpresseur (26) ; et
dans lequel l'étape 2 est réalisée par un premier débitmètre (14) qui mesure le débit auquel le premier liquide s'écoule depuis le premier surpresseur (26) jusqu'à l'orifice de sortie de liquide (16),
**caractérisé en ce**
**qu'**un capteur de pression de gaz (46) est situé entre la première source de pression pneumatique (32) et le premier surpresseur (26), ou un capteur de pression de liquide (48) est situé entre le premier surpresseur (26) et le débitmètre (14) ;
dans lequel les étapes 3 et 4 sont réalisées par une combinaison
d'une première boucle d'asservissement interne (40b) qui communique avec le capteur de pression de gaz (46) ou le capteur de pression de liquide (48) et avec le premier modulateur de pression (44), et
d'une première boucle d'asservissement externe (40a) qui communique avec le premier débitmètre (14) et la première boucle d'asservissement interne (40b),
la première boucle d'asservissement externe (40a) comparant le premier débit mesuré au premier débit désiré et produisant en sortie un premier point de consigne de pression destiné à la première boucle d'asservissement interne (40b), et la première boucle d'asservissement interne (40b) donnant au premier modulateur de pression (44) l'instruction d'ajuster la première source de pression pneumatique (32).

2. Procédé selon la revendication 1, dans lequel le premier conduit présente un diamètre compris entre 10 µm et 65 µm et le premier liquide est fourni au premier orifice de sortie de liquide (16) à un débit inférieur à 100 microlitres/minute.

3. Procédé selon la revendication 1 ou 2, où le procédé inclut :
5) une application d'une pression provenant d'une deuxième source de pression (12) à un deuxième liquide (39), amenant ainsi le deuxième liquide à s'écouler à travers un deuxième conduit ;
6) une détection d'un deuxième débit mesuré auquel le deuxième liquide s'écoule à travers le deuxième conduit ;
7) une comparaison du deuxième débit mesuré avec un deuxième débit d'écoulement désiré du deuxième liquide à travers le deuxième conduit ;
8) une utilisation d'informations obtenues à l'étape 7 pour ajuster la pression appliquée au deuxième liquide par la deuxième source de pression (12) pour ajuster le débit auquel le deuxième liquide s'écoule à travers le conduit par rapport au deuxième débit d'écoulement désiré ;
9) un mélange du premier liquide provenant du premier conduit avec le deuxième liquide provenant du deuxième conduit ; et
10) une fourniture du mélange obtenu à l'étape 9 à l'orifice de sortie de liquide (16).

4. Procédé selon l'une quelconque des revendications 1 à 3, dans lequel le système présente un temps de réponse, lorsque le débit désiré passe d'une première valeur égale au premier débit mesuré à une deuxième valeur qui est égale à 0,2 à 5 fois le premier débit mesuré, inférieur à 1 seconde.

5. Procédé selon l'une quelconque des revendications 1 à 4, dans lequel l'étape 2 est réalisée en utilisant le débitmètre (14) comprenant
(i) un premier tube capillaire dont la longueur et le diamètre sont tels que la perte de charge au travers du premier tube capillaire (50) est au moins une valeur parmi (a) 350 kPa (50 psi) et (b) au moins 5 % de la pression appliquée au premier liquide par la première source de pression (32), et
(ii) des premier et deuxième capteurs de pression (48a-b) qui mesurent la perte de charge au travers du premier tube capillaire (50).

6. Procédé selon la revendication 5, dans lequel le tube capillaire (50) fait partie du premier conduit.

7. Procédé selon l'une quelconque des revendications 1 à 6, dans lequel un quelconque changement du débit auquel le premier liquide s'écoule à travers le premier conduit (16) résulte uniquement d'un changement de la pression appliquée au premier liquide par la première source de pression (32).

8. Procédé selon l'une quelconque des revendications 3 à 7, dans lequel la deuxième source de pression (32) comprend un deuxième surpresseur pneumatique/hydraulique (26), et l'étape 8 est réalisée par une boucle d'asservissement (40) connectée au deuxième surpresseur (26).

9. Procédé selon l'une quelconque des revendications 3 à 7, dans lequel la deuxième source de pression (12) comprend
une deuxième source de pression pneumatique (32), un deuxième surpresseur pneumatique/hydraulique (26), et un deuxième modulateur de pression (44) qui est situé entre la deuxième source de pression pneumatique (32) et le deuxième surpresseur (26) et qui régule la quantité de pression pneumatique fournie au deuxième surpresseur (26) ;
dans lequel l'étape 6 est réalisée par un deuxième débitmètre (14) qui mesure le débit auquel le deuxième liquide s'écoule depuis le deuxième surpresseur (26) jusqu'à l'orifice de sortie de liquide (26) ; et
dans lequel les étapes 7 et 8 sont réalisées par une deuxième boucle d'asservissement interne (40a) qui donne des instructions au deuxième modulateur de pression (44).

10. Procédé selon l'une quelconque des revendications 3 à 7, dans lequel
la deuxième source de pression (12) comprend une deuxième source de pression pneumatique (32), un deuxième surpresseur pneumatique/hydraulique (26), un deuxième modulateur de pression (44) qui est situé entre la deuxième source de pression pneumatique (32) et le deuxième surpresseur (26) et qui régule la pression pneumatique fournie au deuxième surpresseur (26), et un deuxième capteur de pression (46) qui est situé entre la deuxième source de pression pneumatique (32) et le deuxième surpresseur (26) ;
dans lequel l'étape 6 est réalisée par un deuxième débitmètre (14) qui mesure le débit auquel le deuxième liquide s'écoule depuis le deuxième surpresseur (26) jusqu'à l'orifice de sortie de liquide (16) ; et
dans lequel les étapes 7 et 8 sont réalisées par une combinaison d'une deuxième boucle d'asservissement interne (40b) qui communique avec le deuxième capteur de pression (46) et le deuxième modulateur de pression (44), et d'une deuxième boucle d'asservissement externe (40a) qui communique avec le deuxième débitmètre (14) et la deuxième boucle d'asservissement interne (40b), la deuxième boucle d'asservissement externe (40a) comparant le deuxième débit mesuré au deuxième débit désiré et produisant en sortie un deuxième point de consigne de pression destiné à la deuxième boucle d'asservissement interne (40b), et la deuxième boucle d'asservissement interne (40b) donnant au deuxième modulateur de pression (44) l'instruction d'ajuster la deuxième source de pression pneumatique (32).

11. Procédé selon l'une quelconque des revendications 3 à 7, dans lequel la deuxième source de pression (32) comprend une pression générée par une pompe électrocinétique ou un régulateur de débit électrocinétique ou les deux.

12. Procédé selon l'une quelconque des revendications 3 à 11, dans lequel le temps pris pour ajuster le débit du deuxième liquide du deuxième débit mesuré au deuxième débit désiré est inférieur à 1 seconde.

13. Procédé selon l'une quelconque des revendications 3 à 12, dans lequel l'étape 6 est réalisée en utilisant le débitmètre (14) comprenant
(i) un deuxième tube capillaire (50) dont la longueur et le diamètre sont tels que la perte de charge au travers du deuxième tube capillaire (50) est au moins une valeur parmi (a) 350 kPa (50 psi) et (b) au moins 5 % de la pression appliquée au deuxième liquide par la deuxième source de pression, et
(ii) des premier et deuxième capteurs de pression (48a-b) qui mesurent la perte de charge au travers du deuxième tube capillaire (50).

14. Procédé selon l'une quelconque des revendications 3 à 13, dans lequel les premier et deuxième débits désirés varient en fonction du temps, et la somme des premier et deuxième débits désirés reste sensiblement constante.

15. Procédé selon l'une quelconque des revendications 1 à 14, dans lequel le liquide est fourni à l'orifice de sortie de liquide (16) à un débit inférieur à 10 microlitres/minute.

16. Procédé selon l'une quelconque des revendications 1 à 15, dans lequel l'orifice de sortie de liquide (16) est en communication de fluide avec une colonne de chromatographie en phase liquide présentant un diamètre compris entre 50 µm et 1 mm.

17. Appareil approprié à la réalisation du procédé selon l'une quelconque des revendications 1 à 16, l'appareil comprenant
(a) des premier et deuxième orifices d'entrée de liquide (37) des premier et deuxième conduits de liquide respectifs ;
(b) un orifice de sortie de liquide (16) en communication de liquide avec les premier et deuxième orifices d'entrée de liquide ;
(c) des première et deuxième sources de pression (32) ;
(d) un premier surpresseur pneumatique/hydraulique (26) situé entre le premier orifice d'entrée de liquide (37) et l'orifice de sortie de liquide (26) et en communication fonctionnelle avec la première source de pression pneumatique (32), grâce à quoi le premier surpresseur hydraulique/pneumatique (26) force le liquide à sortir par l'orifice de sortie de liquide (16) ;
(e) un deuxième surpresseur pneumatique/hydraulique (26) situé entre le deuxième orifice d'entrée de liquide (37) et l'orifice de sortie de liquide (16) et en communication fonctionnelle avec la deuxième source de pression pneumatique (32), grâce à quoi le deuxième surpresseur pneumatique/hydraulique (26) force le liquide à sortir par l'orifice de sortie de liquide (16) ;
(f) un premier modulateur de pression (44) situé entre la première source de pression pneumatique (32) et le premier surpresseur pneumatique/hydraulique (26), où le premier modulateur de pression (44) régule la quantité de pression pneumatique fournie au premier surpresseur pneumatique/hydraulique (26) ;
(g) un deuxième modulateur de pression (44) situé entre la deuxième source de pression pneumatique (32) et le deuxième surpresseur pneumatique/hydraulique (26), grâce à quoi le deuxième modulateur de pression (44) régule la quantité de pression pneumatique fournie au deuxième surpresseur pneumatique/hydraulique (26) ;
(h) un premier débitmètre (14) qui est situé entre le premier surpresseur pneumatique/hydraulique (26) et l'orifice de sortie de liquide (16) et qui peut mesurer le débit d'un premier liquide s'écoulant depuis le premier surpresseur (26) jusqu'à l'orifice de sortie de liquide (16) ;
(i) un deuxième débitmètre (14) qui est situé entre le deuxième surpresseur pneumatique/hydraulique (26) et l'orifice de sortie de liquide (16) et qui peut mesurer le débit d'un deuxième liquide s'écoulant depuis le deuxième surpresseur (26) jusqu'à l'orifice de sortie de liquide (16) ;
(j) un premier régulateur de boucle d'asservissement externe (40a) en communication avec le premier débitmètre (14) et le premier modulateur de pression (44), grâce à quoi le premier régulateur de boucle d'asservissement externe (40a) compare le débit mesuré du premier liquide à un premier débit désiré et donne au premier modulateur de pression (44) l'instruction d'ajuster la première source de pression pneumatique (32) de sorte que le premier liquide s'écoule en dehors de l'orifice de sortie de liquide (16) au premier débit désiré ;
(k) un deuxième régulateur de boucle d'asservissement externe (40a) en communication avec le deuxième débitmètre (14) et le deuxième modulateur de pression (44), grâce à quoi le deuxième régulateur de boucle d'asservissement externe (40a) compare le débit mesuré du deuxième liquide à un deuxième débit désiré et donne au deuxième modulateur de pression (44) l'instruction d'ajuster la deuxième source de pression pneumatique (32) de sorte que le deuxième liquide s'écoule en dehors de l'orifice de sortie de liquide (16) au premier débit désiré ;
l'appareil comprenant en outre :
un capteur de pression de gaz (46) situé entre la première source de pression pneumatique (32) et le premier surpresseur pneumatique/hydraulique (26), ou un capteur de pression de liquide (48) situé entre le premier surpresseur (26) et le débitmètre (14), et
un premier régulateur de boucle d'asservissement interne (40b) en communication avec le premier capteur de pression (46) ou le capteur de pression de liquide (48) et avec le premier modulateur de pression (44),
dans lequel le premier régulateur de boucle d'asservissement externe (40a) produit en sortie à destination du premier régulateur de boucle d'asservissement interne (40b) un premier point de consigne de pression pneumatique sur la base d'une comparaison du débit mesuré du premier liquide avec le premier débit désiré, et dans lequel le premier régulateur de boucle d'asservissement interne (40b) donne au premier modulateur de pression (44) l'instruction d'ajuster la première source de pression pneumatique (32) si le premier débit mesuré n'est pas le premier débit désiré ;
un capteur de pression de gaz (46) situé entre la deuxième source de pression pneumatique (32) et le deuxième surpresseur pneumatique/hydraulique (26), ou un capteur de pression de liquide (48) est situé entre le premier surpresseur (26) et le débitmètre (14), et
un deuxième régulateur de boucle d'asservissement interne (40b) en communication avec le deuxième capteur de pression (46) ou le capteur de pression de liquide (48) et avec le deuxième modulateur de pression (44),
dans lequel le deuxième régulateur de boucle d'asservissement externe (40a) produit en sortie à destination du deuxième régulateur de boucle d'asservissement interne (40b) un deuxième point de consigne de pression pneumatique sur la base d'une comparaison du débit mesuré du deuxième liquide avec le deuxième débit désiré, et dans lequel le deuxième régulateur de boucle d'asservissement interne (40b) donne au deuxième modulateur de pression (44) l'instruction d'ajuster la deuxième source de pression pneumatique (32) si le deuxième débit mesuré n'est pas le deuxième débit désiré.

18. Appareil selon la revendication 17, dans lequel l'orifice de sortie de liquide (16) est en communication avec une colonne de chromatographie en phase liquide présentant un diamètre compris entre 50 µm et 1 mm.
